(19) Europäisches Patentamt
European Patent Office
Office européen des brevets

(11) Veröffentlichungsnummer : **0 144 807**
**B1**

(12) # EUROPÄISCHE PATENTSCHRIFT

(45) Veröffentlichungstag der Patentschrift : **30.12.86**

(51) Int. Cl.⁴ : **C 08 K 5/34**, C 08 L 27/18, C 08 L 69/00, C 08 L 55/02

(21) Anmeldenummer : **84113616.1**

(22) Anmeldetag : **12.11.84**

(54) **Neue Flammschutzmittelkombinationen und ihre Verwendung in thermoplastischen Formmassen aus Polycarbonaten und ABS-Polymerisaten.**

(30) Priorität : **24.11.83 DE 3342414**

(43) Veröffentlichungstag der Anmeldung : **19.06.85 Patentblatt 85/25**

(45) Bekanntmachung des Hinweises auf die Patenterteilung : **30.12.86 Patentblatt 86/52**

(84) Benannte Vertragsstaaten : **DE FR GB IT**

(56) Entgegenhaltungen :
**DE-A- 2 703 710**
**DE-A- 2 937 877**
**FR-A- 2 281 403**

(73) Patentinhaber : **BAYER AG**
**Konzernverwaltung RP Patentabteilung**
**D-5090 Leverkusen 1 Bayerwerk (DE)**

(72) Erfinder : **Kress, Hans-Jürgen, Dr.**
**Scheiblerstrasse 111**
**D-4150 Krefeld (DE)**
Erfinder : **Müller, Friedemann, Dr.**
**Am Steinacker 5**
**D-4040 Neuss 21 (DE)**
Erfinder : **Peters, Horst, Dr.**
**Winterberg 25**
**D-5090 Leverkusen 3 (DE)**
Erfinder : **Lindner, Christian, Dr.**
**Riehlerstrasse 200**
**D-5000 Köln 60 (DE)**
Erfinder : **Buekers, Josef**
**Kneinstrasse 58a**
**D-4150 Krefeld (DE)**

**EP 0 144 807 B1**

Anmerkung : Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

Jouve, 18, rue St-Denis, 75001 Paris, France

**Beschreibung**

Gegenstand der vorliegenden Erfindung sind neue Flammschutzmittelkombinationen bestehend aus

a) 0,5 bis 2,5 Gew.-Teilen eines Bisphthalimides der Formel (I)

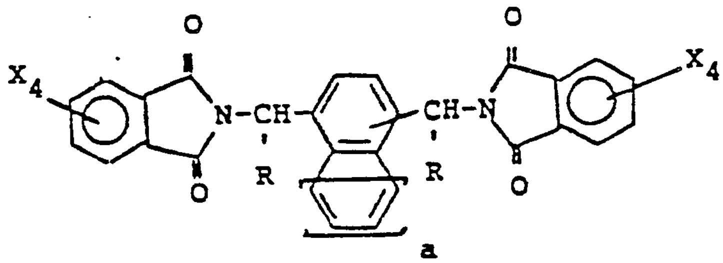

(I)

worin X H oder Halogen, wie beispielsweise Chlor oder Brom, a Null oder 1, und R ein $C_1$-$C_4$-Alkyl, ein $C_5$-$C_6$-Cycloalkyl oder ein gegebenenfalls substituiertes $C_6$-$C_{30}$-Aryl und wenn a gleich Null ist, zusätzlich ein Wasserstoffatom bedeuten, und

b) 0,05 bis 1 Gew.-Teil eines Tetrafluorethylenpolymerisats.

Alkylreste sind z. B. Methyl, Ethyl, n-Propyl, iso-Propyl, n-Butyl und iso-Butyl ; Cycloalkylreste sind z. B. Cyclopentyl und Cyclohexyl ; Arylreste sind z. B. Phenyl und Naphthyl ; substituierte Arylreste sind z. B. alkylsubstituierte Arylreste wie Methylphenyl-, Dimethylphenyl-, Ethylphenyl- oder Propylphenylreste.

Die erfindungsgemäß verwendbaren Bisphthalimide sind literaturbekannt ; siehe z. B. : Strassman, Chem. Ber. 21, S. 579, Brömme, Chem. Ber. 21, S. 2704, Lustig, Chem. Ber. 28, S. 2987 bzw. Kaufler, Chem. Ber. 40, S. 3266 und nach den dort angegebenen Vorschriften herstellbar.

Die erfindungsgemäß geeigneten Tetrafluorethylenpolymerisate sind Polymere mit Fluorgehalten von 65 bis 76 Gew.-%, vorzugsweise 70 bis 76 Gew.-%. Beispiele sind Polytetrafluorethylen, Tetrafluorethylen-Hexafluorpropylen-Copolymere oder Tetrafluorethylencopolymerisate mit geringen Mengen fluorfreier copolymerisierbarer ethylenisch ungesättigter Monomerer. Die Polymerisate sind bekannt. Sie können in feinteiliger Form, gewöhnlich als Pulver, verwendet werden. Sie können nach bekannten Verfahren hergestellt werden, so beispielsweise durch Polymerisation von Tetrafluorethylen in wäßrigem Medium mit einem freie Radikale bildenden Katalysator, beispielsweise Natrium-, Kalium- oder Ammoniumperoxidisulfat bei Drucken von 7 bis 71 $kg/cm^2$ und bei Temperaturen von 0 bis 200 °C, vorzugsweise bei Temperaturen von 20 bis 100 °C. (Nähere Einzelheiten siehe beispielsweise US-Patent 2 393 967).

Die erfindungsgemäß geeigneten Polytetrafluorethylene sollen vorzugsweise Gewichtsmittelmolekulargewichte $\bar{M}w$ zwischen $10^5$ und $10^6$ haben.

Die neuen Flammschutzmittelkombinationen sind zur Flammfestausrüstung von Gemischen aus halogenierten aromatischen, thermoplastischen Polycarbonaten und ABS-Polymerisaten geeignet, wobei V0 nach UL-Subj. 94 bei 3,2 mm Dicke der Teststäbe erzielt wird.

Gegenstand der vorliegenden Erfindung ist somit auch die Verwendung der neuen Flammschutzmittelkombination aus Phthalimiden der Formel (I) und Tetrafluorethylenpolymerisaten zur Flammfestausrüstung von Gemischen aus halogenierten, vorzugsweise bromierten, aromatischen, thermoplastischen Polycarbonaten und ABS-Polymerisaten.

Ein weiterer Gegenstand der Erfindung ist ein Verfahren zur Flammfestausrüstung von Gemischen aus halogenierten, vorzugsweise bromierten aromatischen, thermoplastischen Polycarbonaten und ABS-Polymerisaten, das dadurch gekennzeichnet ist, daß man das Phthalimid der Formel (I) und das Tetrafluorethylenpolymerisat mit dem thermoplastischen Polycarbonat und dem ABS-Polymerisat über einen Doppelwellenextruder mischt und gegebenenfalls granuliert. Hierbei können die erfindungsgemäßen Flammschutzmittel auch vorher einer der beiden Komponenten, dem Polycarbonat oder dem ABS-Polymerisat, beigemischt sein.

Die optimalen Verarbeitungsbedingungen sind derart, daß bei einer Massetemperatur von 240 bis 270 °C, vorzugsweise 250 bis 260 °C und einer Umdrehungszahl von 60 Umdrehungen/min ein Durchsatz von 24 kg/h erreicht wird.

Das verwendete Compoundieraggregat ist vorzugsweise ein Doppelwellenextruder der Firma Werner und Pfleiderer mit der Bezeichnung ZSK 53.

Ein weiterer Gegenstand der vorliegenden Erfindung sind außerdem thermoplastische Formmassen auf Basis von Gemischen aus

a) halogenierten, vorzugsweise bromierten, aromatischen, thermoplastischen Polycarbonaten und

b) ABS-Polymerisaten, gekennzeichnet durch einen Gehalt an

c) Bisphthalimiden der Formel (I) in Mengen von 0,5 bis 2,5 Gewichtsteilen, vorzugsweise 1 bis 2 Gewichtsteilen, bezogen auf 100 Gewichtsteile der Summe der Komponenten (a) + (b), und durch einen Gehalt an

d) Tetrafluorethylenpolymerisaten in Mengen von 0,05 bis 1 Gewichtsteil vorzugsweise 0,1-0,3 Gewichtsteilen, bezogen auf 100 Gewichtsteile der Summe der Komponenten (a) + (b).

Das Verhältnis der Komponenten (a) : (b) liegt zwischen 15 Gew.-% : 85 Gew.-% und 80 Gew.-% : 20 Gew.-%, vorzugsweise zwischen 20 Gew.-% : 80 Gew.-% und 70 Gew.-% : 30 Gew.-% ; das halogenierte Polycarbonat (a) enthält von 3 Gew-% bis 15 Gew.-% Halogen, vorzugsweise Brom, bezogen auf das Gewicht des Polycarbonats (a), was beispielsweise durch Einkondensation von Tetrabrombisphenol-A in das Polycarbonatmolekül erfolgen kann. Halogenierte, aromatische, thermoplastische Polycarbonate im Sinne der Erfindung sind somit Polycarbonate mit aromatisch gebundenen Halogensubstituenten.

Bekannt sind Mischungen auf Basis von Polycarbonaten und ABS-Polymerisaten, die halogenhaltige Polycarbonate enthalten. Siehe DE-OS 2 353 428, DE-OS 2 353 382 und DE-OS 2 353 383. Über eine eventuelle Flammwidrigkeit derartiger Abmischungen wird dort nichts ausgesagt.

Bekannt ist auch, thermoplastische Harze aus Pfropfpolymerisaten auf Basis von Methacrylaten, Copolymerisaten auf Basis von aromatischen Vinylmonomeren und aromatischen Polycarbonaten durch den Zusatz von Carbonatoligomeren aus halogeniertem Bisphenol-A flammwidrig zu machen, wobei zusätzlich ein Synergist, beispielsweise Antimontrioxid zugesetzt werden kann. (siehe DE-OS 2 264 104, insbesondere Seiten 9 und 10 und Anspruch 2).

Bekannt ist auch, ABS-Polymerisate mit halogenierten Oligocarbonaten mit Polymerisationsgraden von 2 bis 10 und gegebenenfalls zusätzlich mit anorganischen oder organischen Antimonverbindungen flammwidrig auszurüsten (siehe DE-OS 2 243 226).

Bekannt sind auch flammwidrige Mischungen aus ABS und hochmolekularen aromatischen, halogenierten Polycarbonaten mit einem Gehalt an Antimonverbindung (Siehe DE-AS 2 446 327).

Die vorstehenden Varianten, die Antimonverbindungen als Synergisten empfehlen, haben den Nachteil, daß sie bei speziellen Verarbeitungsmethoden oder Formmassen, die auf Grund ihres komplizierten Aufbaus eine Herstellung bei hohen Temperaturen notwendig machen, zu Molekulargewichtsabbau, zu Oberflächenstörungen und zu Schlierenbildung zu führen, also eine Beeinträchtigung der Verarbeitungsstabilität bewirken. Damit einhergehend ist oft ein Abfall des mechanischen Niveaus entsprechender Mischungen.

Andererseits wird ohne Zusatz von Antimon kein V0 nach UL-Subj. 94 bei 3,2 mm erreicht.

Bekannt ist aus der DE-OS 1 946 924, halogenhaltige Bisimide als feuerhemmende Zusätze für ABS-Polymerisate zu verwenden, wobei im allgemeinen 5 bis 40 Gew.-%, vorzugsweise 20 bis 30 Gew.-% an Bisimid eingesetzt werden, sofern dieses als einzige feuerhemmende Verbindung zugesetzt wird (Seite 3, vorletzter Absatz der DE-OS).

Es zeigt sich jedoch, daß halogenhaltige Phthalimide in kleinen Mengen bis zu 2,5 Gew.-%, selbst in Kombination mit Tetrafluorethylenpolymerisaten von 1 Gew.-% kein flammwidriges ABS mit V0 nach UL Subj. 94 bei 3,2 mm Dicke bewirken (siehe Vergleichsversuch 1).

In der DE-OS 2 737 913 werden ebenfalls halogenierte Bisphthalimide in Mengen von 1 bis 25 Gew.-%, vorzugsweise 9 bis 15 Gew.-% auf Basis Alkylendiamin als Flammschutzkomponente für kautschukmodifizierte Polystyrole beschrieben. Zum Erreichen einer V + 0-Rezeptur wird jedoch vermutlich wiederum ein Metallsynergist, wie Antimontrioxid, benötigt.

Bekannt ist auch, halogenierte Phthalimide thermoplastischen Polycarbonaten als Flammschutzmittel zuzusetzen (US-Patent 3 873 567), gegebenenfalls in Kombination mit Alkalisalzen von organischen oder anorganischen Säuren und eventuell Polytetrafluorethylenen (DE-OS 2 703 710, DE-OS 2 707 928 und DE-OS 2 740 850). Außerdem sind aus der DE-OS 2 800 923 flammwidrige Polycarbonate mit einem Gehalt an Alkalisalzen anorganischer Säuren, Polytetrafluorethylen und gegebenenfalls aromatisch gebundenem Chlor oder Brom bekannt. Schließlich ist auch die Kombination bekannt aus verzweigten Polycarbonaten, Halogenphthalimiden, Alkalisalzen und zusätzlich organisch gebundenem Brom, welche eine Flammwidrigkeit unter extremen Bedingungen aufweisen. (DE-OS 3 203 905). Eine Schlußfolgerung auf einen wirksamen Flammschutz für Abmischungen von Polycarbonaten mit ABS-Polymerisaten ohne Antimonverbindungen ist aus diesen Lehren für die Flammschutzausrüstung von Polycarbonaten unseres Erachtens nicht möglich.

Bekannt sind schließlich auch flammwidrige thermoplastische Polycarbonat-Legierungen mit einem Gehalt an

1. organischen Halogenverbindungen,
2. Alkalisalz einer anorganischen oder organischen Säure und
3. an einem Stoff, der die Abtropfneigung reduziert, die noch einen weiteren Thermoplasten, wie beispielsweise ABS in Mengen von 1,0 bis 10 Gew.-%, bezogen auf das Gesamtgewicht der Formmasse, enthalten (siehe DE-OS 2 918 883). Als organische Halogenverbindung kann auch Tetrahalogenphthalimid wirksam sein ; als Stoff, der die Abtropfneigung reduziert, können auch Polytetrafluorethylene wirksam sein.

Es hat sich jedoch gezeigt, daß Gemische aus halogenfreien Polycarbonaten, 10 Gew.-% ABS, bezogen auf Gesamtmischung, halogeniertem Phthalimid von 5 Gew.-%, bezogen auf Gesamtmischung, und 3 Gew.-% Polytetrafluorethylen, bezogen auf Gesamtmischung, kein V0 nach Subj. 94 bei 3,2 mm Dicke haben (siehe Vergleichsversuch 2). Die Anwesentheit von Alkalisalzen ist somit offensichtlich unverzichtbar.

Aus der Deutschen Öffenlegungsschrift Nr. 2 903 100 sind flammwidrige Mischungen aus Polycarbonaten, ABS-Polymerisaten und Halogenverbindungen bekannt, wobei die Flammwidrigkeit durch spezielle organische Sulfonate erreicht wird. Fluorierte Polyolefine können als tropfhemmende Mittel zugesetzt werden.

Bekannt ist auch aus der DE-OS 2 937 877, Mischungen von Polycarbonaten mit ABS durch den Zusatz von halogenierten Phthalimiden flammwidrig zu machen, wobei 3 bis 20 Gew.-%, bezogen auf das Gesamtgewicht, eingesetzt werden müssen. Die Behauptung, V0 bei einer Dicke von 3,2 mm zu erhalten, wird jedoch nicht durch Beispiele belegt, vielmehr wird dies in den Beispielen nur durch gleichzeitigen Zusatz von $Sb_2O_3$ erreicht (siehe Beispiele 1 und 2 der DE-OS 2 937 877).

Es hat sich nun gezeigt, daß Gemische aus halogeniertem Polycarbonat und ABS in den Abmischungen gemäß vorliegender Erfindung mit dem alleinigen Zusatz eines halogenierten Phthalimids aus DE-OS 2 937 877 in Mengen von 5 Gew.-Teilen noch kein V0 nach UL-Subj. 94 bei 3,2 mm Dicke haben (siehe Vergleichsversuch 3).

Es hat sich auch gezeigt, daß die erfindungsgemäß verwendbaren Phthalimide der Formel (I) ohne Zusatz von Tetrafluorethylenpolymerisaten in den erfindungsgemäßen Abmischungen aus halogeniertem Polycarbonat und ABS in Mengen bis zu 2,5 Gew.-% bezogen auf Gesamtgewicht, aus Polycarbonat, ABS und Phthalimid der Formel (I) kein gesichertes V0 nach UL-Subj. 94 bei 3,2 mm Dicke liefern (Siehe Vergleichsversuch 4).

Es war daher nicht zu erwarten, daß der kombinierte Einsatz eines Phthalimids der Formel (I) mit Tetrafluorethylenpolymerisaten, beide in kleinen Mengen eingesetzt, eine Verbesserung der Flammwidrigkeit von Polycarbonat/ABS-Abmischungen bewirkt, da dieser Erfolg ohne metallhaltigen Synergisten zustande kommt.

Erfindungsgemäß einsatzbare aromatisch halogenierte, vorzugsweise bromierte, aromatische thermoplastische Polycarbonate sind die bekannten Copolycarbonate aus halogenierten Diphenolen und halogenfreien Diphenolen, wobei die Molmengen an einkondensierten halogenierten Diphenolen so gewählt sind, daß die Copolycarbonate von 3 Gew.-% bis 15 Gew.-% Halogen, vorzugsweise Brom enthalten, bezogen auf Gewicht Polycarbonatharz. Bevorzugte Mengen an Halogen sind von 5 bis 10 Gew.-%, bezogen wiederum auf Gewicht Polycarbonatharz.

Geeignete halogenierte Diphenole sind insbesondere 2,2-Bis-(4-hydroxy-3,5-dibromphenyl)-propan und 2,2-Bis-(4-hydroxy-3,5-dichlorphenyl)-propan. Besonders bevorzugt ist 2,2-Bis-(4-hydroxy-3,5-dibromphenyl)-propan.

Geeignete cokondensierbare Diphenole sind Hydrochinon, Resorcin, Dihydroxydiphenyle, Bis-(hydroxyphenyl)-alkane, Bis-(hydroxyphenyl)-cycloalkane, Bis-(hydroxyphenyl)-sulfide, Bis-(hydroxyphenyl)-ether, Bis-(hydroxyphenyl)-ketone, Bis-(hydroxyphenyl)-sulfoxide, Bis-(hydroxyphenyl)-sulfone und α,α'-Bis-(hydroxyphenyl)-diisopropylbenzole, wobei die Phenylreste auch Alkylsubstituenten tragen können.

Diese und weitere geeignete Diphenole sind z. B. in den US-Patentschriften 3 028 365, 2 999 835 und 2 999 846, in den deutschen Offenlegungsschriften 1 570 703, 2 063 050, 2 063 052, 2 211 956, 2 211 957, der französischen Patentschrift 1 561 518 und der Monographie « H. Schnell, Chemistry and Physics of Polycarbonates, Interscience Publishers, New York, 1964 » beschrieben.

Bevorzugte cokondensierbare Diphenole sind : 4,4'-Dihydroxydiphenyl, 2,2-Bis-(4-hydroxyphenol)-propan, 2,4-Bis-(4-hydroxyphenol)-2-methylbutan, 1,1-Bis-(4-hydroxyphenol)-cyclohexan, α,α'-Bis-(4-hydroxyphenyl)-p-diisopropylbenzol, 2,2-Bis-(3-methyl-4-hydroxyphenyl)-propan, Bis-(3,5-dimethyl-4-hydroxyphenyl)-methan, 2,2-Bis-(3,5-dimethyl-4-hydroxyphenyl)-propan, Bis (3,5-dimethyl-4-hydroxyphenyl)-sulfon, 2,4-Bis-(3,5-dimethyl-4-hydroxyphenyl)-2-methylbutan, 1,1-Bis-(3,5-dimethyl-4-hydroxyphenyl)-cyclohexan und α,α'-Bis-(3,5-dimethyl-4-hydroxyphenyl)-p-diisopropyl-benzol.

Besonders bevorzugte cokondensierbare Diphenole sind 2,2-Bis-(4-hydroxyphenyl)-propan, 2,2-Bis-(3,5-dimethyl-4-hydroxyphenyl)-propan und 1,1-Bis-(4-hydroxyphenyl)-cyclohexan.

Erfindungsgemäß einsetzbare halogenierte Polycarbonate sind beispielsweise solche aus 5-25 Gewichtsteilen Tetrabrombisphenol A und 95-75 Gewichtsteilen eines oder mehrerer der vorstehend genannten Diphenole, insbesondere solche aus Tetrabrombisphenol-A und 2,2-Bis-(4-hydroxyphenyl)-propan (Bisphenol-A).

Erfindungsgemäß bevorzugte halogenierte Polycarbonate sind die Copolycarbonate aus den genannten bromierten Diphenolen mit den als bevorzugt genannten cokondensierbaren Diphenolen. Entsprechendes gilt für die besonders bevorzugten, erfindungsgemäß einsetzbaren Copolycarbonate.

Die Herstellung dieser erfindungsgemäß einsetzbaren Copolycarbonate erfolgt in bekannter Weise gemäß den vorstehend für die Diphenole genannten Literaturstellen. Geeignet sind somit die drei bekannten Verfahren, das Phasengrenzflächenverfahren, das in homogener Phase und das der Schmelzumesterung.

Die aromatischen Polycarbonate können durch den Einbau geringer Mengen, vorzugsweise von

Mengen zwischen 0,05 und 2,0 Mol-% (bezogen auf eingesetzte Diphenole), an drei- oder mehr als dreifunktionellen Verbindungen, z. B. solchen mit drei oder mehr als drei phenolischen Hydroxygruppen, verzweigt sein.

Die aromatischen Polycarbonate sollen in der Regel mittlere Gewichtsmittel-Molekulargewichte $M_w$ von 10 000 bis 200 000, vorzugsweise von 20 000 bis 80 000 haben (ermittelt durch Messungen der rel. Viskosität in $CH_2Cl_2$ bei 25 °C bei einer Konzentration von 0,5 g in 100 ml).

Erfindungsgemäß einsetzbare ABS-Polymerisate sind Mischungen aus (b.1) 25-100 Gew.-Tln. eines Pfropfpolymerisates von ethylenisch ungesättigten Monomeren auf Kautschuken aus der Reihe der Dienmonomer-, und EPDM-Kautschuke und (b.2) 0-75 Gew.-Tl. eines kautschukfreien Vinylmonomerpolymerisats.

Pfropfpolymerisate (b.1) im Sinne der Erfindung sind solche, in denen auf einen Kautschuk eine Monomerenmischung von 95-50 Gew.-% Styrol, α-Methylstyrol, oder Mischungen daraus und 5-50 Gew.-% Acrylnitril, Methacrylnitril oder Mischungen daraus pfropfpolymerisiert ist.

Geeignete Kautschuke sind insbesondere Polybutadien, Butadien/Styrol-Copolymerisate mit bis zu 30 Gew.-% einpolymerisiertem Styrol oder Copolymerisate von Butadien und Acrylnitril mit bis zu 20 Gew.-% Acrylnitril. Weitere geeignete Kautschuke sind z. B. Polyisopren oder Polychloropren. Andere geeignete Kautschuke sind z. B. EPDM-Kautschuk, also Kautschuk aus Ethylen, Propylen und einem unkonjugierten Dienmonomer. Besonders bevorzugt sind Dienmonomerkautschuke.

Die Pfropfmischpolymerisate (b.1) enthalten 5-80 Gew.-%, insbesondere 20-70 Gew.-%, Kautschuk und 95-20 Gew.-%, insbesondere 80-30 Gew.-%, pfropfcopolymerisierte Monomere. Die Kautschuke liegen in diesen Pfropfmischpolymerisaten in Form wenigstens partiell vernetzter Teilchen einer mittleren Teilchengröße von 0,08-5 μm, insbesondere von 0,1-1 μm, vor. Derartige Pfropfmischpolymerisate werden durch radikalische Pfropfcopolymerisation von Monomeren aus der Reihe Styrol, α-Methylstyrol, Acrylnitril, Methacrylnitril in Gegenwart der zu pfropfenden Kautschuke hergestellt und sind durchweg bekannt. Bevorzugte Herstellungsverfahren für solche Pfropfmischpolymerisate sind die Emulsions-, Lösungs-, Masse- oder Suspensionspolymerisation.

Die kautschukfreien Vinylmonomerpolymerisate (b.2) können aus den Pfropfmonomeren oder ähnlichen Monomeren aufgebaut sein, insbesondere aus wenigstens einem Monomeren aus der Reihe Styrol, α-Methylstyrol, Halogenstyrol, Acrylnitril, Methacrylnitril, Maleinsäureanhydrid, Vinylacetat. Es handelt sich bevorzugt um Copolymerisate aus 95-50 Gew.-% Styrol, α-Methylstyrol, oder Mischungen daraus mit 5-50 Gew.-% Acrylnitril, Methacrylnitril oder Mischungen daraus. Solche Copolymeren entstehen häufig bei der Pfropfmischpolymerisation als Nebenprodukte, besonders dann, wenn große Mengen Monomerer auf kleine Mengen Kautschuk gepfropft werden. Es ist dabei möglich, neben oder anstelle der so entstandenen Copolymeren noch getrennt hergestellte Copolymere dieser Art zuzumischen.

Derartig getrennt hergestellte Copolymere sind harzartig, thermoplastisch und kautschukfrei ; es sind insbesondere Copolymere aus Styrol und/oder α-Methylstyrol mit Acrylnitril. Besonders bevorzugte Copolymere bestehen aus 20-40 Gew.-% Acrylnitril und 80-60 Gew.-% Styrol oder α-Methylstyrol. Solche Copolymermassen sind bekannt und lassen sich insbesondere durch radikalische Polymerisationsprozesse, insbesondere durch Emulsions-, Suspensions-, Lösungs- oder Massepolymerisation herstellen.

Die Copolymeren besitzen vorzugsweise Molekulargewichte von 15 000 bis $2 \cdot 10^5$.

Geeignete Bisphthalimide der Formel (I) sind beispielsweise Tetrachlorphthalimide oder Phthalimide auf Basis o-, m- oder p-Xylylendiamin, insbesondere Tetrachlorphthalimid oder Phthalimid auf Basis m-Xylylendiamin ;

Geeignete Tetrafluorethylenpolymerisate sind beispielsweise solche, wie sie unter dem Namen Hostaflon(R) bei der Firma Hoechst erhältlich sind.

Die genannten Bisphthalimide sind nach den eingangs erwähnten Literaturstellen bzw. nach dem im Herstellungsbeispiel beschriebenen Verfahren herstellbar.

Die Herstellung der Flammschutzmittelkombination erfolgt entweder durch direktes Mischen der Einzelkomponenten oder als Konzentrat durch Herstellung von Konzentraten der Einzelkomponenten in einem der thermoplastischen Mischungsbestandteile und anschließende Mischung dieser Konzentrate.

Die Einarbeitung der Flammschutzmittelkombination in die thermoplastische Formmasse aus halogeniertem Polycarbonat und ABS-Polymerisat kann durch Vermischen aller Einzelkomponenten erfolgen oder durch wahlweise Zumischung der Komponenten zu dem thermoplastischen Polycarbonat.

In einer bevorzugten Herstellungsmethode wird zunächst ein Latex eines Pfropfcopolymerisats (b.1) ausgefällt und getrocknet. Das so erhaltene Pulver wird dann mit dem Polycarbonat und der Flammschutzsmittelkombination sowie separat hergestelltem Copolymer (b.2) abgemischt. Geeignet sind hierfür z. B. Mischwalzwerke, Schneckenextruder oder Innenmischer, wobei Einarbeitungstemperaturen von 240 bis 270 °C erforderlich sind.

Die erfindungsgemäßen flammwidrigen Formmassen auf Basis von Polycarbonaten und ABS-Polymerisaten können zusätzlich die für Polycarbonate und/oder ABS-Polymerisate bekannten Additive wie Stabilisatoren, Pigmente, Fließmittel, Gleitmittel, Entformungsmittel, Antistatika enthalten, wobei diese entweder dem Polycarbonat und/oder dem ABS-Polymerisat vorab zugemischt oder bei der Vermischung der Einzelkomponenten der erfindungsgemäßen Formmasse zugemischt werden.

Die Formmassen der vorliegenden Erfindung können zur Herstellung von Formkörpern jeder Art

verwendet werden. Insbesondere können Formkörper durch Spritzguß hergestellt werden. Beispiele für herstellbare Formkörper sind : Gehäuseteile jeder Art (z. B. für Haushaltsgeräte wie Saftpressen, Kaffeemaschinen, Mixer) oder Abdeckplatten für den Bausektor und Teile für den Kfz-Sektor. Sie werden außerdem auf dem Gebiet der Elektrotechnik eingesetzt, weil sie sich durch sehr gute elektrische Eigenschaften auszeichnen.

Die Formmassen der folgenden Beispiele wurden auf einem Innenkneter bei ca. 240 °C beziehungsweise in einem Doppelwellenextruder bei ca. 260 °C durch Vermischen der Einzelkomponenten hergestellt.

Das Brandverhalten der Proben wurde nach UL-Subj. 94 V in Prüfkörperdicken von 3,2 mm gemessen. Der UL 94-Test wird wie folgt durchgeführt :

Substanzproben werden zu Stäben der Abmessungen 127 × 12,7 × 3,2 mm geformt. Die Stäbe werden vertikal so montiert, daß die Unterseite des Probekörpers sich 305 mm über einem Streifen Watte befindet. Jeder Probestab wird einzeln mittels zweier aufeinanderfolgender Zündvorgänge von 10 sec Dauer entzündet, die Brenneigenschaften nach jedem Zündvorgang werden beobachtet und danach die Probe bewertet. Zum Entzünden der Probe wird ein Bunsenbrenner mit einer 10 mm (3/8 inch) hohen blauen Flamme von Erdgas mit einem Wärmeinhalt von $3{,}73 \times 10^4$ kJ/m$^3$ (1,000 BTU per cubic foot) benutzt.

Die UL 94-V-0-Klassifizierung umfaßt die nachstehend beschriebenen Eigenschaften von Materialien, die gemäß der UL 94-Vorschrift geprüft wurden. Die Polycarbonate in dieser Klasse enthalten keine Proben, die länger als 10 s nach jeder Einwirkung der Testflamme brennen ; sie zeigen keine Gesamtflammzeit von mehr als 50 s bei der zweimaligen Flammeinwirkung auf jeden Probensatz, sie enthalten keine Proben, die vollständig bis hinaus zu der am oberen Ende der Probe befestigten Halteklammer abbrennen ; sie weisen keine Proben auf, die die unterhalb der Probe angeordnete Watte durch brennende Tropfen oder Teilchen entzünden ; sie enthalten auch keine Proben, die länger als 30 s nach Entfernen der Testflamme glimmen.

Andere UL 94-Klassifizierungen bezeichnen Proben, die weniger flammwidrig und selbstverlöschend sind und die flammende Tropfen oder Teilchen abgeben. Diese Klassifizierungen werden mit UL 94 V-1 und V-2 bezeichnet. N.b. heißt « nicht bestanden » und ist die Klassifizierung von Proben die eine Nachbrennzeit von ≥ 30 sec aufweisen.

## Beispiele

I. Komponenten

a) Copolycarbonat

Ein Copolycarbonat enthaltend Bisphenol-A und Tetrabrombisphenol-A mit einer relativen Lösungsviskosität von 1,284, gemessen in $CH_2Cl_2$ bei 25 °C und einer Konzentration von 0,5 Gew.-%. Gehalt an Brom 5 Gew.-%.

b) ABS-Polymerisat aus

b.1) Pfropfpolymerisat (60 Gewichtsteile) :

60 Gew.-Tle. eines Pfropfpolymerisats, hergestellt durch Propfung von 35 Gew.-Tln. Styrol und 15 Gew.-Tln. Acrylnitril auf 50 Gew.-Tln. eines grobteiligen Polybutadiens (gemäß den Angaben der DE-AS 1 247 665 und 1 269 360 hergestellt über eine Emulsionspolymerisation), wobei der mittlere Teilchendurchmesser der in Latexform vorliegenden Polybutadienpfropfgrundlage zwischen 0,3 und 0,4 µm liegt (diese Teilchengrößenangabe sowie entsprechende Angaben im Text stellen mittlere Teilchendurchmesser ($d_{50}$) dar und werden durch Ultrazentrifugenmessung bestimmt ; s. dazu : W. Scholtan *et al.* Colloids Z. Polymere, 250 (1972), S. 783-796).

und b.2) Copolymerisat (40 Gewichtsteile) :

40 Gew.-Tle. eines Styrol-Acrylnitril-Copolymerisats mit einem Styrol-Acrylnitril-Verhältnis von 70 : 30 und einer Grenzviskosität von $[\eta] = 0{,}55$ dl/g (Messung in Dimethylformamid bei 20 °C).

c) Herstellung eines erfindungsgemäß verwendbaren Bisphthalimids der Formel (I)

Beispielshaft für alle anderen Verbindungen wird die Herstellung des Bisphthalimids auf Basis m-Xylylendiamin beschrieben. Durch Variation des Phthalsäureanhydrids beziehungsweise des Diamins können jeweils andere Bisphthalimide analog erhalten werden.

3 Mol (444 g) Phthalsäureanhydrid wurden zusammen mit 22,2 g Eisessig (5 Gew.-% bezogen auf das eingesetzte Anhydrid) in 1 776 g Toluol auf 100 °C aufgeheizt. Zu dieser Suspension wird innerhalb von 1 Std. eine Lösung von 1,5 Mol (204 g) m-Xylylendiamin in 612 g Methanol zugetropft, wobei gleichzeitig Methanol abdestilliert wird. Der Ansatz wird bis auf 1 l Restlösung eingeengt und anschließend abgekühlt und der Niederschlag abgesaugt. Dieser wurde 3 mal mit ca. 3 l dest. Wasser aufgeschlämmt, mit Wasser

neutral und mit Methanol nachgewaschen. Das erhaltene Material wurde bei 80 °C im Wasserstrahlvakuum getrocknet.

Ausbeute : 555 g
Elementaranalyse :
theor. : C 72,7 H 4,0 O 16,2 N 7,1
gef. : C 72,3 H 4,03 O 16,5 N 7,06

d) Das eingesetzte Tetrafluorethylenpolymerisat ist ein Produkt der Firma Hoechst mit der Bezeichnung Hostaflon[(R)].

II. Verwendungsbeispiele (einschließlich Vergleichsversuche)

Mit Hilfe eines Doppelwellenextruders wurden bei 250 °C jeweils Mischungen aus 70 Gewichtsteilen des Copolycarbonates a) und 30 Gewichtsteilen des ABS-Polymerisats b) hergestellt und granuliert, wobei gegebenenfalls das Tetrafluorethylenpolymerisat d) und gegebenenfalls zusätzlich das Bisphthalimid c) eingearbeitet wurden. Die Granulate wurden zu Probekörpern der Abmessung 127 mm × 12,2 mm × 3,2 mm abgespritzt und gemäß UL-94-V auf Brandwidrigkeit untersucht.

Beispiele

| PC (a) Gew.-Teile | ABS (b) Gew.-Teile | PTFE (d) Gew.-Teile | BPI (c) Gew.-Teile | UL-94 V (3,2 mm) |
|---|---|---|---|---|
| 70 | 30 | - | - | n.b. |
| 70 | 30 | 0,15 | - | n.b. |
| 70 | 30 | 0,15 | 2,0 | V-O |

n.b. = nicht bestanden, also weder V0, noch V1 noch V2.
BPI = Bisphthalimid auf Basis m-Xylylendiamin gemäß Beispiel c).

III. Vergleichsversuche 1 bis 4 zum Stand der Technik

Vergleichsversuch 1

Ein ABS-Polymerisat (b) wurde über einen Doppelwellenextruder mit den unten angegebenen halogenierten Bisphthalimiden und gegebenenfalls mit einem Tetrafluorethylenpolymerisat d) gemischt und granuliert. Die Mischungen wurden in Probekörpern der Abmessung 127 mm × 12,2 mm × 3,2 mm abgespritzt und gemäß UL-94-V auf Brandwidrigkeit untersucht.

| Bisphthalimid Gew.-Teile | PTFE (d) Gew.-Tle. | ABS (b) | ULV-94 V 3,2 mm |
|---|---|---|---|
| m-Xylylenbistetra-chlorphthalimid (c) | | | |
| 2,5 | | 97,5 | n.b. |
| 2,5 | 1,0 | 96,5 | n.b. |
| Ethylenbistetra-bromphthalimid | | | |
| 2,5 | 1,0 | 96,5 | n.b. |

Vergleichsversuch 2

82 Gew.-Teile eines halogenfreien Polycarbonats (Basis Bisphenol-A ; rel. Lösungsviskosität von 1,28, gemessen als 0,5 %ige Lösung in Methylenchlorid und bei 25 °C), 10 Gew.-Teile ABS-Polymerisat b), 5 Gew.-Teile Hexamethylenbistetrachlorphthalimid und 3 Gew.-Teile PTFE-Polymer d) wurden bei ca. 270 °C über einen Doppelwellenextruder gemischt und granuliert. Diese Mischung wurde zu Probekörpern der Abmessung 127 mm × 12,2 mm × 3,2 mm abgespritzt und gemäß UL-94 V auf Brandwidrigkeit untersucht.

Ergebnis : UL-94 V bei 3,2 mm V1

Vergleichsversuch 3

70 Gew.-Teile des Copolycarbonats a), 30 Gew.-Teile ABS-Polymerisat b) und 5 Gew.-Teile Ethylenbistetrabromphthalimid (FR-Additiv gemäß DE-OS 2 937 877) wurden bei ca. 250 °C über einen Doppelwellenextruder gemischt und granuliert. Diese Mischung wurde zu Probekörpern der Abmessung 127 mm × 12,2 mm × 3,2 mm abgespritzt und gemäß UL-94 V auf Brandwidrigkeit untersucht.

Ergebnis : UL-94 V bei 3,2 mm V-2

Vergleichsversuch 4

70 Gew.-Teile des Copolycarbonats a), 30 Gew.-Teile des ABS-Polymerisats b) und 2 Gew.-Teile des Bisphthalimids c) (m-Xylylenbisphthalimid) wurden bei ca. 250 °C über einen Doppelwellenextruder gemischt und granuliert. Diese Mischung wurde zu Prüfkörpern der Abmessung 127 mm × 12,2 mm × 3,2 mm abgespritzt und gemäß UL-94 V auf Brandwidrigkeit untersucht. Als Resultat wurden sowohl V0 als auch V2 erhalten.

**Patentansprüche**

1. Flammschutzmittelkombinationen bestehend aus

a) 0,5 bis 2,5 Gew.-Teilen eines Bisphthalimids der Formel (I)

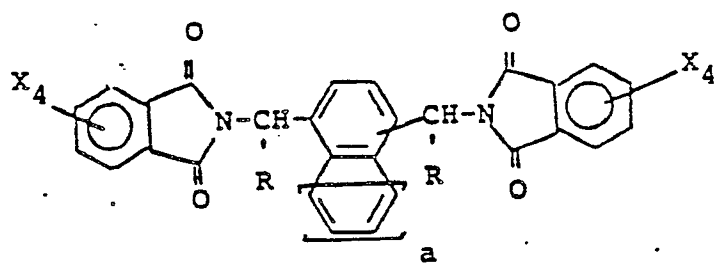

(I)

worin X H oder Halogen, a Null oder 1 und R ein $C_1$-$C_4$-Alkyl, ein $C_5$-$C_6$-Cycloalkyl oder ein gegebenenfalls substituiertes $C_6$-$C_{30}$-Aryl und wenn a gleich Null ist, zusätzlich R ein Wasserstoffatom bedeuten, und

b) 0,05 bis 1 Gew.-Teil eines Tetrafluorethylenpolymerisats.

2. Verwendung der Flammschutzmittelkombination gemäß Anspruch 1 zur Flammfestausrüstung von Gemischen aus halogenierten, aromatischen, thermoplastischen Polycarbonaten und ABS-Polymerisaten.

3. Verfahren zur Flammfestausrüstung von Gemischen aus halogenierten, aromatischen, thermoplastischen Polycarbonaten und ABS-Polymerisaten, das dadurch gekennzeichnet ist, daß man das Phthalimid der Formel (I) und das Tetrafluorethylenpolymerisat über einen Doppelwellenextruder bei einer Massetemperatur von 240 bis 270 °C, einer Umdrehungszahl von 60 Umdrehungen/min und einem Durchsatz von 24 kg/h dem thermoplastischen Polycarbonat und dem ABS-Polymerisat zumischt.

4. Thermoplastische Formmassen auf Basis von Gemischen aus

a) halogenierten, aromatischen, thermoplastischen Polycarbonaten und

b) ABS-Polymerisaten, dadurch gekennzeichnet, daß sie einen Gehalt an

c) Bisphthalimiden der Formel (I) in Mengen von 0,5 bis 2,5 Gewichtsteilen, bezogen auf 100 Gewichtsteile der Summe der Komponenten (a) + (b), und einen Gehalt an

d) Tetrafluorethylenpolymerisaten in Mengen von 0,05 bis 1 Gewichtsteil, bezogen auf 100 Gewichtsteile der Summe der Komponenten (a) + (b) aufweisen, wobei das Gewichtsverhältnis der Komponenten (a) : (b) zwischen 15 Gew.-% : 85 Gew.-% und 80 Gew.-% : 20 Gew.-% liegt, und wobei das halogenierte Polycarbonat (a) von 3 Gew.-% bis 15 Gew.-% Halogen enthält, bezogen auf Gewicht des Polycarbonats (a).

**Claims**

1. Flameproofing agent combinations consisting of

a) 0.5 to 2.5 parts by weight of a bisphthalimide of the formula (I)

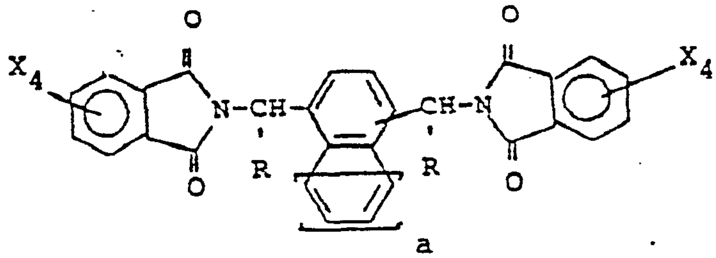

(I)

wherein X denotes H or halogen, a denotes zero or 1 and R denotes a $C_1$-$C_4$-alkyl, a $C_5$-$C_6$-cycloalkyl or an optionally substituted $C_6$-$C_{30}$-aryl and when a is zero, R additionally denotes a hydrogen atom, and

b) 0.05 to 1 part by weight of a tetrafluoroethylene polymer.

2. Use of the flameproofing agent combination according to Claim 1 for providing mixtures of halogenated, aromatic, thermoplastic polycarbonates and ABS polymers with a flameproof finish.

3. Process for providing mixtures of halogenated, aromatic, thermoplastic polycarbonates and ABS polymers with a flameproof finish, which is characterised in that the phthalimide of the formula (I) and the tetrafluoroethylene polymer are added to the thermoplastic polycarbonate and the ABS polymer *via* a twin-screw extruder at a stock temperature of 240 to 270 °C, a speed of rotation of 60 revolutions/min and a throughput of 24 kg/h.

4. Thermoplastic moulding compositions based on mixtures of

a) halogenated, aromatic, thermoplastic polycarbonates and

b) ABS polymers, characterised in that they contain

c) bisphthalimides of the formula (I) in quantities of 0.5 to 2.5 parts by weight, based on 100 parts by weight of the sum of components (a) + (b), and

d) tetrafluoroethylene polymers in quantities of 0.05 to 1 part by weight, based on 100 parts by weight of the sum of components (a) + (b), the ratio by weight of components (a) : (b) being between 15 % by weight : 85 % by weight and 80 % by weight : 20 % by weight, and the halogenated polycarbonate (a) containing from 3 % by weight to 15 % by weight of halogen, based on the weight of the polycarbonate (a).

**Revendications**

1. Combinaisons d'agents ignifugeants consistant en

a) 0,5 à 2,5 parties en poids d'un bis-phtalimide de formule I

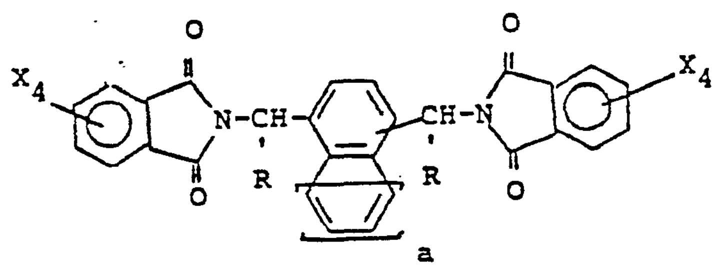

(I)

dans laquelle X représente H ou un halogène, a est égale à 0 ou 1, et R représente un groupe alkyle en $C_1$-$C_4$, cycloalkyle en $C_5$-$C_6$ ou aryle en $C_6$-$C_{30}$ éventuellement substitué, et en outre, lorsque a est égal à 0, R représente un atome d'hydrogène, et

b) 0,05 à 1 partie en poids d'un polymère du tétrafluoréthylène.

2. Utilisation de la combinaison d'agents ignifugeants selon la revendication 1 pour l'ignifugation de mélanges de polycarbonates thermoplastiques aromatiques halogénés et de polymères ABS.

3. Procédé pour ignifuger des mélanges de polycarbonates thermoplastiques aromatiques halogénés et de polymères ABS, caractérisé en ce que l'on mélange au polycarbonate thermoplastique et au polymère ABS le phtalimide de formule I et le polymère du tétrafluoréthylène sur une extrudeuse à double bis à une température dans la masse de 240 à 270 °C, une vitesse de rotation de 60 tours/minute et une production de 24 kg/h.

4. Matières à mouler thermoplastiques à base de mélanges de

a) des polycarbonates thermoplastiques aromatiques halogénés et

b) des polymères ABS, caractérisées en ce qu'elles contiennent

c) des bis-phtalimides de formule I en quantités de 0,5 à 2,5 parties en poids pour 100 parties en poids de la somme des composants a) + b) et

d) des polymères du tétrafluoréthylène en quantité de 0,05 à 1 partie en poids, pour 100 parties en poids de la somme des composants a) + b), les proportions relatives en poids entre les composants a) et b) allant de 15 % en poids : 85 % en poids à 80 % en poids : 20 % en poids, et le polycarbonate halogéné a) contenant de 3 % en poids à 15 % en poids d'halogène, par rapport au poids du polycarbonate a).